# EUROPEAN PATENT APPLICATION

(11) **EP 4 628 405 A1**
(43) Date of publication of application: **08.10.2025**
(21) Application number: 23895954.8
(22) Date of filing: 25.06.2023
(51) Int. Cl.: B64C 27/26

(54) **COMBINATION METHOD FOR MODULAR COMPONENT OF AIRCRAFT, AND AIRCRAFT**

(30) Priority: 02.12.2022 US 202263385771 P; 02.12.2022 US 202263385772 P; 02.12.2022 US 202263385773 P
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2023/102128
(87) International publication number: WO 2024/113790

(57) **Abstract**

The invention relates to the field of aircraft and discloses a modular assembly method of an aircraft, which comprises: provide a flight platform of an aircraft, which has a left fixed wing and a right fixed wing; a left canard wing and right canard wing; an avionics compartment, which is engaged with the left fixed wing and the right fixed wing; the left inboard arm connects the left fixed wing to the left canard wing; the right inboard arm connects the right fixed wing to the right canard wing; the left inboard arm has a first lift propeller, a second lift propeller and a third lift propeller and a left vertical tail; the right inboard arm has a fourth lift propeller, a fifth lift propeller and a sixth lift propeller and a right vertical tail; according to the requirements of increasing cruise load, aircraft modular components are mounted without changing the structure of the aircraft flight platform to meet the different functions and mission requirements of the aircraft.

## Description

### FIELD OF THE INVENTION

The invention relates to the field of aircraft, in particular to a modular assembly method of an aircraft.

### BACKGROUND OF THE INVENTION

With the development of electric technology, eVTOL (electric Vertical Takeoff and Landing) has become one of the air vehicles and is a powerful path to develop new dimensions of space in the air. An eVTOL aircraft, with its vertical take-off and landing advantages, does not need a runway, so it can adapt to a variety of temporary take-off environments. Since it does not need to build a runway, there is no need to build an airport for eVTOL aircraft to take off in practice, which puts forward higher requirements for the maintenance and overhaul of eVTOL aircraft.

In the actual use process, it is found that most of the existing aircraft are integrated design and the installation and disassembly of the aircraft require specialized technicians. In order to cope with sudden different working conditions, such as air taxi, air ambulance, etc., a combination method of modular components of the aircraft and the aircraft are provided.

### SUMMARY OF THE INVENTION

The invention aims to provide a modular assembly method of an aircraft according to the requirements of increasing cruise load. The modular components of the aircraft can be mounted without changing the structure of the flight platform of the aircraft, the operation is simple, and the requirements of different functions and tasks of the aircraft can be met.

To achieve this purpose, the invention adopts the following technical schemes:
a modular assembly method of an aircraft comprises:
provide an aircraft flight platform, which has a left fixed wing and a right fixed wing; a left canard wing and a right canard wing; an avionics compartment is engaged with the left fixed wing and the right fixed wing; The left inboard arm connects the left fixed wing with the left canard wing; The right inboard arm connects the right fixed wing with the right canard wing; The left inboard arm has a first lift propeller, a second lift propeller and a third lift propeller and a left vertical tail; The right inboard arm has a fourth lift propeller, a fifth lift propeller and a sixth lift propeller and a right vertical tail.

According to the requirements of increasing cruise load, aircraft modular components are selected to be mounted without changing the structure of the aircraft flight platform to meet the different functions and mission requirements of the aircraft.

As an option, the modular assembly of the aircraft comprises an outer canard wing segment that can be quickly detachable. When it is required to increase the lift of the aircraft in a fixed-wing mode by 10% to 20% on the basis of the original lift value obtained by the flight platform of the aircraft, the outer canard wing segment that can be quickly detachable is mounted on the inboard arm.

As a preferred option, the modular assembly of the aircraft comprises a quickly detachable outboard arm. When it is required to increase the lift force of the aircraft in the rotary-wing mode by 20% to 70% on the basis of the original lift value obtained by the aircraft flight platform, it is selected to mount the quickly detachable outboard arm.

As a preferred option, the mounting method of the quickly detachable outboard arm comprises: mount the outboard arm to a leading edge of the left fixed wing and of the right fixed wing, or mount the outboard arm to a trailing edge of the left fixed wing and of the right fixed wing, or mount the outboard arm to the leading edge and to the trailing edge of the left fixed wing and of the right fixed wing, respectively.

As a preferred option, the left canard wing, the left inboard arm, the avionics compartment, the right inboard arm and the right canard wing are assembled into a fuselage with A-type frame construction, which significantly improves the mounting structure stiffness of the frontmost four motors in the fuselage.

As an optimal option, the cross-section shape of the arm is streamlined, which can reduce a vortex formed by the propeller downwash flow interfered by the aircraft fuselage and thus reduce the loss of the lift motor.

As an option, the outer canard wing segment comprises a positioning part and a locking part, and after the outer canard wing segment is mounted on the fixed position of the inboard arm through the positioning part, the outer canard wing segment and the inboard arm are locked by the locking part.

As a preferred option, the distance between the outboard arm and the inboard arm is at least greater than the sum of a rotation radius of the lift propeller mounted in the inboard arm, a rotation radius of the lift propeller mounted in the outboard arm, and a convection clearance.

As a preferred option, the convection clearance is 8% to 15% of a maximum of propeller diameters on the outboard arms and on the inboard arms.

As a preferred option, the outboard arm comprises an arm recess, and the cross section of the arm recess in the longitudinal direction is an inverted isosceles trapezoid, which is used to adapt to the shape of a contour separation surface of the fixed wing, a partial carbon fiber reinforcement is provided at the flanging of the contour separation surface of the fixed wing.

The invention further provides an aircraft, which applies the modular assembly method of an aircraft described in the scheme.

The invention has the advantages that the lift force of the aircraft in fixed-wing mode or in rotary-wing mode can be increased by mounting the quickly detachable outer canard wing segment or the outboard arm without changing the structure of the flight platform of the aircraft through the modular assembly method.

### BRIEF DESCRIPTION OF DRAWINGS

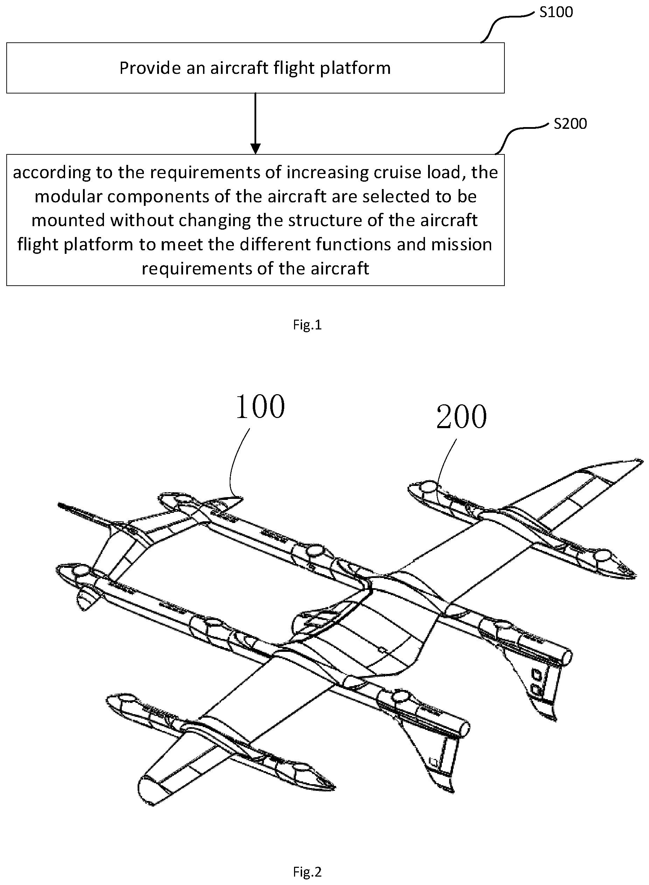

FIG. 1 is a flow chart of modular assembly method of the invention;
FIG. 2 is a schematic diagram of the UAV applicable to the modular assembly method of the invention;

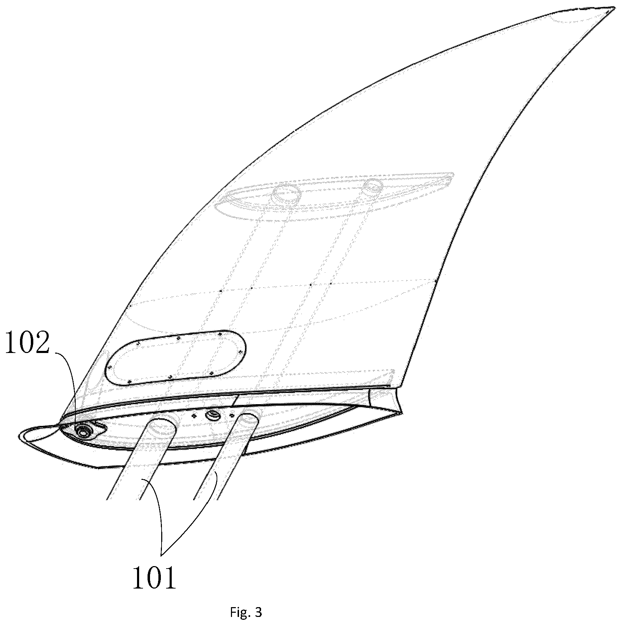

FIG. 3 is a schematic diagram of the outer canard wing segment of the invention;

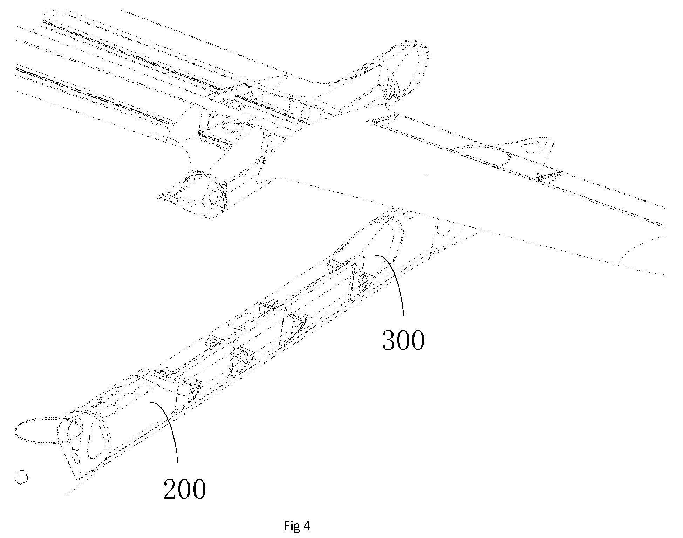

FIG. 4 is a schematic diagram of the outboard arm of the invention.

### DETAILED DESCRIPTION

The following embodiments further describe the technical teaching of this invention. It is understood that the specific embodiments described herein are for the purpose of interpreting this invention only. It should also be noted that, for ease of description, only the parts related to this invention are shown in the attached drawings, not all of them.

In the description of this invention, it should be noted that, unless otherwise expressly specified and limited, the terms "installation", "connection", "connection" shall be understood broadly, for example, these may be fixed or removable connections. It can be a mechanical connection, it can also be an electrical connection. It can be directly connected, or it can be indirectly connected through an intermediate medium, and it can be the connection within two components. For persons of ordinary skill in the art, the specific meaning of the above terms in this invention may be understood on a case-by-case basis.

In this invention, unless otherwise expressly specified and limited, the first feature may include direct contact between the first and second features "above" or "below" the second features, or may include contact between the first and second features not directly but through another feature between them. Furthermore, the first feature "above", "above" and "above" the second feature include the first feature being directly above and diagonally above the second feature, or simply indicating that the first feature is at a higher level than the second feature. The first feature "below", "below", and "below" the second feature include the first feature being directly below and diagonally below the second feature, or simply indicating that the first feature is less horizontal than the second feature.

The present invention provides a modular assembly method of an aircraft, comprising:
provide an aircraft flight platform, which has a left fixed wing and a right fixed wing; a left canard wing and a right canard wing; an avionics compartment, which is engaged with the left fixed wing and the right fixed wing; The left inboard arm connects the left fixed wing to the left canard wing; The right inboard arm connects the right fixed wing to the right canard wing; The left inboard arm has a first lift propeller, a second lift propeller and a third lift propeller and a left vertical tail; The right inboard arm has a fourth lift propeller, a fifth lift propeller and a sixth lift propeller and a right vertical tail.

According to the requirements of increasing cruise load, the aircraft modular components are mounted without changing the structure of the aircraft flight platform to meet the different functions and mission requirements of the aircraft.

Specifically, the modular components of the aircraft comprise a quickly detachable outer canard wing segment 100. When it is required to increase the aircraft lift force in a fixed-wing mode by 10% to 20% on the basis of the original lift value obtained by the aircraft flight platform, it is selected to mount the quickly detachable outer canard wing segment 100 on the inboard arm.

By adding the outer canard wing segment, the lift force of the aircraft in the fixed-wing mode can be increased by 10% to 20% on the basis of the original lift value obtained by the original flight platform of the aircraft. Moreover, after installing the quickly detachable outer canard wing segment, the head drop effect during flight can be overcome and the undesired pitching moment can be avoided. Therefore, the need to compensate the pitching moment will not affect the flight efficiency of the UAV. In addition, after the installation of the outer canard wing segment, the static stability redundancy of the aircraft can be increased by about 2% through the structural assembly of the outer canard wing segment and the original flight platform of the aircraft, and a control loss of the flight control system can be reduced.

On the contrary, without changing the structure of the flight platform of the aircraft, the lift force of the aircraft in the fixed-wing mode can be rapidly reduced and energy consumption can be reduced through the quickly detachable outer canard wing segment in case of insufficient endurance. Similarly, the modular components of the aircraft comprise the quickly detachable outboard arm 200. When it is required to increase the lift force of the aircraft in the rotary-wing mode by 20% to 70% on the basis of the original lift value obtained by the aircraft flight platform, it is selected to mount the quickly detachable outboard arm 200.

By adding the outboard arm, on the one hand, from the perspective of the overall structural design of the aircraft, the outboard arm is required to be close to the central axis of the aircraft in order to reduce the weight of the aircraft and save more weight and space to increase power and payload. On the other hand, according to the aerodynamic requirements, when the propeller is operating, the corresponding air flow will be generated. If the outboard arm and the inboard arm are mounted too close, flow interference will be generated, and vortices will be formed after the interference to decrease the efficiency of the lift motor. Therefore, the installation of the outboard arm and the inboard arm cannot be too close. However, if it is too far away, the weight of the aircraft will inevitably increase. Therefore, when the convection clearance is 8% to 15% of the maximum of the propeller diameters on the outboard and on the inboard arms, the interference vortex generated between the outboard and the inboard arms and the weight of the aircraft can be balanced, and the aircraft payload and aerodynamic efficiency can be met at the same time.

Of course, without changing the structure of the flight platform of the aircraft, by quickly dismounting the outboard arm and the lift propeller on the outboard arm, the lift of the aircraft in the fixed-wing mode can be rapidly reduced, and the energy consumption and noise decibel can be reduced if the endurance is insufficient or the noise is required to be reduced.

Further, the mounting method of the quickly detachable outboard arm 200 comprises: mount the outboard arm 200 to the leading edge of the left fixed wing and of the right fixed wing, and increase the lift force of the aircraft in rotary-wing mode by 20% to 40% on the basis of the original lift value obtained by the flight platform of the aircraft. Or mount the outboard arm 200 to the trailing edge of the left fixed wing and of the right fixed wing, and increase the lift of the aircraft in rotary-wing mode by 25% to 45% on the basis of the original lift value obtained by the flight platform of the aircraft. Or mount the outboard arm 200 to the leading edge and to the trailing edge of the left fixed wing and of the right fixed wing respectively, and the lift force of the aircraft in the rotary-wing mode is increased by 50% to 70% on the basis of the original lift value obtained by the flight platform of the aircraft.

Single installation to the leading edge or to the trailing edge can adjust the center of gravity of the aircraft to different positions.

Further, the left canard wing, the left inboard arm, the avionics compartment, the right inboard arm and the right canard wing are assembled into a fuselage with A-type frame construction, and the closed structure design significantly improves the installation structure stiffness of the frontmost four motors in the fuselage.

It is worth noting that the section shape of the arm is streamlined, which can reduce the vortex formed by the propeller downwash flow interfered by the aircraft fuselage, thus reducing the loss of the lift motor.

Further, the outer canard wing segment 100 comprises a positioning part 101 and a locking part 102. After the outer canard wing segment is mounted on a fixed position of the inboard arm through the positioning part 101, the outer canard wing segment 100 and the inboard arm are locked through the locking part 102.

The positioning part 101 is used to quickly locate the outer canard wing segment 100 to the inboard arm to save operation time, and then the locking part 102 is used to lock the outer canard wing segment 100 to prevent the outer canard wing segment 100 from separating from the inboard arm during the operation of the UAV.

For example, the distance between the outboard arm 200 and the inboard arm is at least greater than the sum of a rotating radius of the lift propeller mounted on the inboard arm, a rotating radius of the lift propeller mounted on the outboard arm 200 and the convection clearance.

Specifically, for the outboard arm 200, on the one hand, from the perspective of the overall structural design of the aircraft, the outboard arm is required to be close to the central axis of the aircraft in order to reduce the weight of the aircraft and save more weight space to increase power and payload. On the other hand, according to the aerodynamic requirements, when the propeller is operating, corresponding air flow will be generated. If the outboard arm 200 and the inside boom are mounted too close, flow interference will be generated, and vortices will be formed after interference to decrease the efficiency of the lift motor. Therefore, the installation of the outboard arm 200 and the inside boom cannot be too close. However, if it is too far away, the weight of the aircraft will inevitably increase. Therefore, when the convection clearance is 8% to 15% of the maximum of the propeller diameters on the outboard and on the inboard arms, the interference vortex generated between the outboard and inboard arms and the weight of the aircraft can be balanced, and the aircraft payload and aerodynamic efficiency can be met at the same time.

Preferably, the outboard arm 200 comprises an arm recess, the cross section of the arm recess 300 in the longitudinal direction is an inverted isosceles trapezoid and is used to adapt to the shape of a contour separation surface of the fixed wing, which is partially reinforced with carbon fiber at the flanging.

The inverted isosceles trapezoid of the arm recess meets the aerodynamic surface requirements.

The present invention further provides an aircraft which is applicable to the modular assembly method of an aircraft described in the above scheme.

The above embodiments are illustrative only of the principle and efficacy of this invention. The above embodiments may be modified or altered by any person familiar with the technology without prejudice to the purposes of this invention. Therefore, all equivalent modifications or alterations made by persons with ordinary knowledge in the field of the technology to which they belong, which are not divorced from the purposes revealed in this invention, shall still be covered by the claims of this invention.

## Claims

1. A modular assembly method of an aircraft, comprising:
provide an aircraft flight platform, comprising a left fixed wing and a right fixed wing; a left canard wing and a right canard wing; an avionics compartment engaged with the left fixed wing and the right fixed wing; a left inboard arm connecting the left fixed wing with the left canard wing; a right inboard arm connecting the right fixed wing with the right canard wing; the left inboard arm has a first lift propeller, a second lift propeller and a third lift propeller and a left vertical tail; the right inboard arm has a fourth lift propeller, a fifth lift propeller and a sixth lift propeller and a right vertical tail;
according to the requirements of increasing cruise load, modular components of the aircraft are selected to be mounted without changing the structure of the aircraft flight platform to meet the different functions and mission requirements of the aircraft.

2. The modular assembly method of an aircraft according to claim 1, wherein the modular components of aircraft comprise a quickly detachable outer canard wing segment (100), when it is required to increase the aircraft lift force in a fixed-wing mode by 10% to 20% on the basis of the original lift value obtained by the aircraft flight platform, it is selected to mount the quickly detachable outer canard wing segment (100) on the inboard arm.

3. The modular assembly method of an aircraft according to claim 1, wherein the aircraft modular components comprise a quickly detachable outboard arm (200), when it is required to increase the lift force of the aircraft in a rotary-wing mode by 20% to 70% on the basis of the original lift value obtained by the aircraft flight platform, it is selected to mount the quickly detachable outboard arm (200).

4. The modular assembly method of an aircraft according to claim 3, wherein the mounting method of the quickly detachable outboard arm (200) comprises: mount the outboard arm (200) to a leading edge of the left fixed wing and of the right fixed wing, or mount the outboard arm (200) to a trailing edge of the left fixed wing and of the right fixed wing, or mount the outboard arm (200) to the leading edge and to the trailing edge of the left fixed wing and of the right fixed wing, respectively.

5. The modular assembly method of an aircraft according to claim 1, wherein the left canard wing, the left inboard arm, the avionics compartment, the right inboard arm and the right canard wing are assembled into a fuselage with A-type frame construction, which significantly improves the mounting structure stiffness of the frontmost four motors in the fuselage.

6. The modular assembly method of an aircraft according to any one of claims 1 or 3, wherein a cross-section shape of the arm is streamlined, which can reduce a vortex formed by the propeller downwash flow interfered by the aircraft fuselage and thus reduce the loss of a lift motor.

7. The modular assembly method of an aircraft according to claim 2, wherein the outer canard wing segment (100) comprises a positioning part (101) and a locking part (102), and after the outer canard wing segment (100) is mounted on a fixed position of the inboard arm through the positioning part (101), the outer canard wing segment (100) and the inboard arm are locked by the locking part (102).

8. The modular assembly method of an aircraft according to claim 3, wherein a distance between the outboard arm (200) and the inboard arm is at least greater than the sum of a rotation radius of the lift propeller mounted in the inboard arm, a rotation radius of the lift propeller mounted in the outboard arm (200), and a convection clearance.

9. The modular assembly method of an aircraft according to claim 3, wherein the outboard arm (200) comprises an arm recess (300), and a cross section of the arm recess (300) in the longitudinal direction is an inverted isosceles trapezoid, which is used to adapt to a shape of a contour separation surface of the fixed wing, a partial carbon fiber reinforcement is provided at the flanging of the contour separation surface of the fixed wing.

10. An aircraft, applying the modular assembly method of an aircraft described in any one of claims 1-9.
